# EUROPEAN PATENT APPLICATION

(11) **EP 3 742 780 A1**
(43) Date of publication of application: **25.11.2020**
(21) Application number: 18909405.5
(22) Date of filing: 16.03.2018
(51) Int. Cl.: H04W 16/14

(54) **COMMUNICATION METHOD AND COMMUNICATION DEVICE**

(71) Applicant: Huawei Technologies Co., Ltd., Longgang Shenzhen, Guangdong 518129 (CN)
(72) Inventor: ZHU, Xiaosong, Shenzhen, Guangdong 518129 (CN); WU, Yiling, Shenzhen, Guangdong 518129 (CN); LI, Zheng, Shenzhen, Guangdong 518129 (CN)
(74) Representative: Gill Jennings & Every LLP
(86) International application number: PCT/CN2018/079357
(87) International publication number: WO 2019/174055

(57) **Abstract**

This application provides a communication method and a communications apparatus. The method includes: sending, by a base station, resource information of a first frequency band to a terminal device, where the first frequency band includes a first carrier set and a second carrier set, the resource information of the first frequency band includes an identifier of a carrier in the first carrier set and/or an identifier of a carrier in the second carrier set, a carrier in the first carrier set can be used for communication between the terminal device and the base station, and a carrier in the second carrier set cannot be used for communication between the terminal device and the base station; and communicating, by the base station, with the terminal device based on the resource information of the first frequency band. According to this application, the terminal device can determine one or more valid carriers in discrete carriers that include the one or more valid carriers and one or more invalid carriers, so that the terminal device can communicate with a network device on the one or more valid carriers, thereby ensuring effective communication between the terminal device and the network device.

## Description

### TECHNICAL FIELD

This application relates to the communications field, and more specifically, to a communication method and a communications apparatus.

### BACKGROUND

With development of mobile internet and internet of things industries, more and more mobile terminals are interconnected to share more abundant data. In a power system, there are also more and more terminals that need wireless communication.

In the power system, a narrowband internet of things (Narrow Band Internet of Things, NB-IoT) R14 technology is mainly used in a 230 MHz IoT system. Each channel has a bandwidth of 25 kHz, and there is a 12 MHz frequency band. The 230 MHz IoT system has a discrete spectrum, and has different spectrum division from a conventional LTE system. Therefore, to enable a terminal device to perform communication on a valid carrier, how to allocate resources to the terminal device in the discrete spectrum needs to be considered.

### SUMMARY

This application provides a communication method and a communications apparatus, so that a terminal device can perform communication on a valid carrier.

According to a first aspect, a communication method is provided. The method includes: sending, by a base station, resource information of a first frequency band to a terminal device, where the first frequency band includes a first carrier set and a second carrier set, the resource information of the first frequency band includes an identifier of a carrier in the first carrier set and/or an identifier of a carrier in the second carrier set, the first carrier can be used for communication between the terminal device and the base station, and the second carrier cannot be used for communication between the terminal device and the base station; and communicating, by the base station, with the terminal device based on the resource information of the first frequency band.

According to the communication method in this embodiment of this application, a network device (that is, an example of the base station) determines one or more valid carriers (that is, an example of one or more first carriers) and one or more invalid carriers (that is, an example of one or more second carriers) on the first frequency band, and sends information about the one or more valid carriers and/or information about the one or more invalid carriers to the terminal device, so that the terminal device determines the one or more valid carriers in discrete carriers, and then communicates with the network device on the one or more valid carriers, thereby ensuring effective communication between the terminal device and the network device.

With reference to the first aspect, in some implementations of the first aspect, the resource information of the first frequency band includes information about a starting position of the first frequency band. The base station communicates with the terminal device on a third carrier based on the identifier of the carrier in the first carrier set, and/or the identifier of the carrier in the second carrier set, and the information about the starting position of the first frequency band, where the third carrier is a carrier in the first carrier set.

The terminal device may determine, based on the information about the starting position of the first frequency band and identification information of the one or more first carriers, the one or more valid carriers that are used to communicate with the network device and one or more frequency band resources. The terminal device may determine the one or more invalid carriers based on the starting position of the first frequency band and information about the one or more second carriers, and then determine the one or more valid carriers used to communicate with the network device.

With reference to the first aspect, in some implementations of the first aspect, the resource information of the first frequency band includes a quantity N of carriers, where the quantity N of carriers is a quantity of carriers allocated by the base station to the terminal device, and N is an integer greater than or equal to 1. The communicating, by the base station, with the terminal device based on the resource information of the first frequency band includes communicating, by the base station, with the terminal device on N carriers based on the quantity N of carriers and the identifier of the carrier in the first carrier set, where the N carriers are carriers in the first carrier set.

The terminal device may determine, based on the identification information of the one or more first carriers, the one or more valid carriers used to communicate with the network device, and then determine, based on the quantity of carriers, the required N carriers in a plurality of valid carriers and the one or more frequency band resources, thereby reducing overheads.

With reference to the first aspect, in some implementations of the first aspect, the resource information of the first frequency band further includes information about a time domain resource occupied for communication between the base station and the terminal device.

With reference to the first aspect, in some implementations of the first aspect, the resource information of the first frequency band is carried in radio resource control RRC connection reconfiguration signaling.

The resource information of the first frequency band is carried in the RRC connection reconfiguration signaling, thereby reducing signaling.

According to a second aspect, a communication method is provided. The method includes: receiving, by a terminal device, resource information of a first frequency band sent by a base station, where the first frequency band includes a first carrier set and a second carrier set, the resource information of the first frequency band includes an identifier of a carrier in the first carrier set and/or an identifier of a carrier in the second carrier set, the carrier in the first carrier set can be used for communication between the terminal device and the base station, and the carrier in the second carrier set cannot be used for communication between the terminal device and the base station; and determining, by the terminal device in the first carrier set based on the resource information of the first frequency band, a carrier used to communicate with the base station.

According to the communication method in this embodiment of this application, the terminal device receives information about one or more valid carriers and/or information about one or more invalid carriers that are/is sent by a network device, so that the terminal device can determine the one or more valid carriers in discrete carriers, and then communicate with the network device on the one or more valid carriers, thereby ensuring effective communication between the terminal device and the network device.

With reference to the second aspect, in some implementations of the second aspect, the resource information of the first frequency band further includes information about a starting position of the first frequency band. The determining, by the terminal device in the first carrier set based on the resource information of the first frequency band, a carrier used to communicate with the base station includes determining, by the terminal device in the first carrier set, the carrier used to communicate with the base station, based on the identifier of the carrier in the first carrier set, and/or the identifier of the carrier in the second carrier set, and the information about the starting position of the first frequency band.

The terminal device may determine, based on the information about the starting position of the first frequency band and identification information of one or more first carriers, the one or more valid carriers that are used to communicate with the network device and one or more frequency band resources. The terminal device determines the one or more invalid carriers on the first frequency band based on the starting position of the first frequency band and information about one or more second carriers, and then determines the one or more valid carriers used to communicate with the network device.

With reference to the second aspect, in some implementations of the second aspect, the resource information of the first frequency band includes a quantity N of carriers, where the quantity N of carriers is a quantity of carriers allocated by the base station to the terminal device, and N is an integer greater than or equal to 1. The determining, by the terminal device in the first carrier set based on the resource information of the first frequency band, a carrier used to communicate with the base station includes determining, by the terminal device in the first carrier set based on the quantity N of carriers and the identifier of the carrier in the first carrier set, N carriers used to communicate with the base station, where the N carriers are carriers in the first carrier set.

The terminal device may determine, based on the identification information of the one or more first carriers, the one or more valid carriers used to communicate with the network device, and then determine, based on the quantity of carriers, the required N carriers in a plurality of valid carriers and the one or more frequency band resources, thereby reducing overheads.

According to a third aspect, a communications apparatus is provided. The communications apparatus includes units configured to perform the steps of the communication method according to the first aspect and the implementations of the first aspect.

In a design, the communications apparatus is a communications chip. The communications chip may include an input circuit or interface configured to send information or data, and an output circuit or interface configured to receive information or data.

In another design, the communications apparatus is a network device. The communications chip may include a transmitter configured to send information or data, and a receiver configured to receive information or data.

According to a fourth aspect, a communications apparatus is provided. The communications apparatus includes units configured to perform the steps of the communication method according to the second aspect and the implementations of the second aspect.

In a design, the communications apparatus is a communications chip. The communications chip may include an input circuit or interface configured to send information or data, and an output circuit or interface configured to receive information or data.

In another design, the communications apparatus is a terminal device. The communications chip may include a transmitter configured to send information or data, and a receiver configured to receive information or data.

According to a fifth aspect, a communications device is provided. The communications device includes a processor and a memory. The memory is configured to store a computer program. The processor is configured to invoke the computer program from the memory and run the computer program, so that the communications apparatus performs the communication method according to any one of the possible implementations of the first aspect or the second aspect.

Optionally, there are one or more processors and one or more memories.

Optionally, the memory may be integrated into the processor, or the memory and the processor are separately disposed.

Optionally, the communications device further includes a transmitter (transmitter) and a receiver (receiver).

In a possible design, a network device is provided. The network device includes a transceiver, a processor, and a memory. The processor is configured to control the transceiver to send and receive a signal. The memory is configured to store a computer program. The processor is configured to invoke the computer program from the memory and run the computer program, so that the network device performs the method according to any one of the first aspect or the possible implementations of the first aspect.

In another possible design, a terminal device is provided. The terminal device includes a transceiver, a processor, and a memory. The processor is configured to control the transceiver to send and receive a signal. The memory is configured to store a computer program. The processor is configured to invoke the computer program from the memory and run the computer program, so that the terminal device performs the method according to any one of the second aspect or the possible implementations of the second aspect.

According to a sixth aspect, a system is provided. The system includes the foregoing terminal device and network device.

According to a seventh aspect, a computer program product is provided. The computer program product includes a computer program (which may also be referred to as code or an instruction). When the computer program is run, a computer is enabled to perform the method according to any one of the possible implementations of the first aspect or the second aspect.

According to an eighth aspect, a computer-readable medium is provided. The computer-readable medium stores a computer program (which may also be referred to as code or an instruction). When the computer program is run on a computer, the computer is enabled to perform the method according to any one of the possible implementations of the first aspect or the second aspect.

According to a ninth aspect, a chip system is provided. The chip system includes a memory and a processor. The memory is configured to store a computer program. The processor is configured to invoke the computer program from the memory and run the computer program, so that a communications device on which the chip system is installed performs the method according to any one of the possible implementations of the first aspect or the second aspect.

According to the communication method and the communications apparatus in the embodiments of this application, the network device determines the one or more valid carriers and the one or more invalid carriers on the first frequency band, and sends the information about the one or more valid carriers and/or the information about the one or more invalid carriers to the terminal device, so that the terminal device determines the one or more valid carriers in the discrete carriers, and then communicates with the network device on the one or more valid carriers, thereby ensuring effective communication between the terminal device and the network device.

### BRIEF DESCRIPTION OF DRAWINGS

FIG. 1 is a schematic diagram of a system to which a communication method and a communications apparatus according to an embodiment of this application are applicable;
FIG. 2 is a schematic diagram of a spectrum characteristic of a 230 MHz IoT system;
FIG. 3 is a schematic diagram of an available frequency of a 230 MHz IoT system;
FIG. 4 is a schematic diagram of a communication method applicable to an embodiment of this application;
FIG. 5 is a schematic diagram of carrier allocation in a communication method applicable to an embodiment of this application;
FIG. 6 is a schematic diagram of occupying a frame by a single burst in a communication method applicable to an embodiment of this application;
FIG. 7 is a schematic diagram of a transmission time point of a communication method applicable to an embodiment of this application;
FIG. 8 is an access flowchart of accessing NB-IoT by a terminal device;
FIG. 9 is another schematic diagram of a communication method applicable to an embodiment of this application;
FIG. 10 is a schematic diagram of a communication method applicable to another embodiment of this application;
FIG. 11 is a schematic diagram of a MAC control element of a communication method applicable to another embodiment of this application;
FIG. 12 is a schematic diagram of a processing latency of a communication method applicable to another embodiment of this application;
FIG. 13 is a schematic block diagram of a communications apparatus according to an embodiment of this application;
FIG. 14 is a schematic structural diagram of a network device according to an embodiment of this application;
FIG. 15 is another schematic block diagram of a communications apparatus according to an embodiment of this application; and
FIG. 16 is another schematic structural diagram of a terminal device according to an embodiment of this application.

### DESCRIPTION OF EMBODIMENTS

The following describes technical solutions of this application with reference to accompanying drawings.

The technical solutions of embodiments of this application may be applied to various communications systems, such as a global system for mobile communications (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunication system (Universal Mobile Telecommunications System, UMTS), a worldwide interoperability for microwave access (Worldwide Interoperability for Microwave Access, WiMAX) communications system, a future 5th generation (5th Generation, 5G) system or a new radio (New Radio, NR) system, and an internet of things (Internet of Things, IoT) system.

A base station in the embodiments of this application may be a network device. The network device may be a device configured to communicate with a terminal device. The network device may be a base transceiver station (Base Transceiver Station, BTS) in the global system for mobile communications (Global System of Mobile communication, GSM) or in the code division multiple access (Code Division Multiple Access, CDMA) system, or may be a NodeB (NodeB, NB) in the wideband code division multiple access (Wideband Code Division Multiple Access, WCDMA) system, or may be an evolved NodeB (Evolutional NodeB, eNB, or eNodeB) in the LTE system, or may be a radio controller in a cloud radio access network (Cloud Radio Access Network, CRAN) scenario. Alternatively, the network device may be a relay station, an access point, a vehicle-mounted device, a wearable device, a network device in a future 5G network, a network device in a future evolved PLMN network, or the like. This is not limited in the embodiments of this application.

In addition, in the embodiments of this application, the network device provides a service for a cell, and the terminal device communicates with the network device by using a transmission resource (for example, a frequency domain resource, namely, a spectrum resource) allocated by the cell. The cell may be a cell corresponding to the network device (for example, the base station). The cell may belong to a macro base station, or may belong to a base station corresponding to a small cell (Small cell). The small cell herein may include a metro cell (Metro cell), a micro cell (Micro cell), a pico cell (Pico cell), a femto cell (Femto cell), and the like. These small cells have characteristics of small coverage areas and low transmit power, and are applicable to providing a high-rate data transmission service.

In addition, a plurality of cells may simultaneously work on a same frequency on a carrier in the LTE system or the 5G system. In some special scenarios, it may be considered that a concept of the carrier is equivalent to a concept of the cell. For example, in a carrier aggregation (Carrier Aggregation, CA) scenario, when a secondary carrier is configured for UE, both a carrier index of the secondary carrier and a cell identify (Cell Identify, Cell ID) of a secondary cell working on the secondary carrier are carried. In this case, it may be considered that the concept of the carrier is equivalent to the concept of the cell. For example, that the UE accesses a carrier is equivalent to that the UE accesses a cell.

The terminal device in the embodiments of this application may be user equipment, an access terminal, a subscriber unit, a subscriber station, a mobile station, a mobile console, a remote station, a remote terminal, a mobile device, a user terminal, a terminal, a wireless communications device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (Public Land Mobile Network, PLMN). This is not limited in the embodiments of this application.

In addition, in the embodiments of this application, the terminal device may alternatively be a terminal device in an internet of things (Internet of Things, IoT) system. IoT is an important component in development of future information technologies. A main technical feature of the IoT is to enable an object to connect to a network by using a communications technology, to implement an intelligent network of human-machine interconnection and machine-to-machine interconnection.

In this embodiment of this application, massive connections, deep coverage, and terminal power saving may be implemented by using, for example, a narrowband (Narrow Band, NB) technology in an IoT technology. The network device allocates resources to the terminal device, so that the terminal device transmit data. According to the communication method in the embodiments of this application, the terminal device can transmit the data to the network device on a valid carrier in a discrete narrowband spectrum.

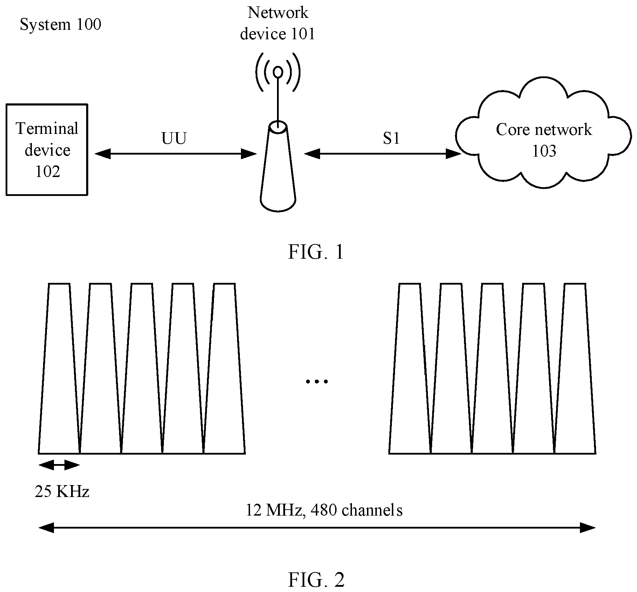

FIG. 1 is a schematic diagram of a system 100 to which a communication method and a communications apparatus according to embodiments of this application can be applicable. As shown in FIG. 1, the system 100 includes a network device 101. The network device 101 may be an eNodeB or the like. The network device 101 may include one or more antennas, and the network device 101 may additionally include a transmitter chain and a receiver chain. A person of ordinary skill in the art may understand that both the transmitter chain and the receiver chain may include a plurality of components (such as a processor, a modulator, a multiplexer, a demodulator, a demultiplexer, or an antenna) related to signal sending and receiving.

The network device 101 may communicate with a plurality of terminal devices, for example, a terminal device 102. However, it may be understood that the network device 101 may communicate with any quantity of terminal devices that are similar to the terminal device 102. For example, the terminal device 102 may be a cellular phone, a smartphone, a portable computer, a handheld communications device, a handheld computing device, a satellite radio apparatus, a global positioning system, a PDA, and/or any other appropriate device configured to perform communication in a wireless communications system 100.

The system 100 may further include a core network 103, for example, a packet core network (Evolved Packet Core, EPC). A plurality of access manners, such as a 3GPP access manner and a non-3GPP access manner, can be supported in the EPC. The EPC is a converged architecture that supports heterogeneous networks. The EPC is a core network of a 4G mobile communications network. The EPC belongs to the core network and has traditional mobile network capabilities, such as subscriber subscription data storage, mobility management, and data exchange. The EPC can also provide users with ultra-high-speed internet access experience.

As shown in FIG. 1, the network device 101 may communicate with the terminal device 102 by using a UU interface. The UU interface has functions such as broadcast paging and radio resource control (RRC) connection processing, handover and power control decision execution, radio resource management and control processing, and baseband and radio frequency processing information processing. In addition, a network device 102 may communicate with the core network 103 by using an S1 interface. The terminal device 102 performs access through the network device such as a base station, or through a routing node. The network device 101 is connected to the core network 103 to complete data backhaul and forward transmission. The network device 101 may be an entity that is on a network side and that is configured to send or receive a signal, for example, may be the base station. UE may be any terminal. For example, the UE may be user equipment in machine type communication. Multi-service transmission is supported between the terminal device 110 and a network device 120. For example, an enhanced mobile broadband service, an ultra-reliable and low-latency machine-to-machine communications service, and an ultra-large connection machine-to-machine communications service in a 5G system are supported.

In addition, the communications system 100 may be a PLMN network, a D2D network, an M2M network, an IoT network, or another network. FIG. 1 is merely a simplified schematic diagram used as an example. Another network device may further be included in a network, and is not shown in FIG. 1.

For data transmission between the terminal device and the network device, the network device allocates resources to the terminal device in a plurality of manners. One solution is to activate semi-persistent scheduling (Semi-Persistent Scheduling, SPS). In an LTE system, when the terminal device needs to use a resource or send data, the terminal device needs to first apply to the base station for a resource. Corresponding data can be sent only after a time-frequency-space resource is obtained. Some communications services have fixed formats. For example, in a voice service, a data packet is usually transmitted every 20 ms. In this way, the data packet can be transmitted over an air interface every 20 ms, so that signaling interaction on a physical downlink control channel (Physical Downlink Control Channel, PDCCH) is not required each time. If resources are allocated in a fixed manner in the voice service, corresponding resource information no longer needs to be notified to the terminal device in a service process, so that bottom-layer signaling interaction information can be reduced. Such an idea is used in the SPS. After the base station configures the SPS for the resources for the first time, the scheduling is valid in an entire SPS periodicity until the SPS is released, so that the base station or the terminal device only needs to continuously transmit data, and does not need to perform resource allocation again. In this way, the PDCCH resources can be saved through the SPS.

Specifically, whether the SPS can be performed is controlled by L3. To be specific, the L3 configures the SPS by sending radio resource control connection reconfiguration (Radio Resource Control Connection Reconfiguration) signaling that carries an SPS configuration (SPS, Configuration, SPS-Config). The SPS-Config mainly includes three parts, where a semi-Persist Scheduling C-RNTI field indicates that the SPS is activated if the UE detects scheduling scrambled by a C-RNTI; an sps-ConfigDL field is used to indicate a downlink SPS configuration; and an sps-ConfigUL field is used to indicate an uplink SPS configuration.

A protocol does not specify a time for activating and deactivating downlink SPS, but specifies an activation manner. To be specific, after detecting DL Grant that is scrambled by using a semi-Persist Scheduling C-RNTI, the terminal device needs to activate or deactivate the SPS. Similarly, the protocol does not specify a time for activating uplink SPS, but specifies an activation manner and a deactivation manner. To be specific, after detecting UL Grant that is scrambled by using the semi-Persist Scheduling C-RNTI, the terminal device needs to activate or deactivate the SPS.

An SPS mechanism may not be suitable for a discrete spectrum. The discrete spectrum may mean that a frequency band includes a plurality of carriers, and the plurality of carriers include one or more valid carriers and one or more invalid carriers. The valid carrier is a carrier that can be used for communication between the terminal device and the base station, and the invalid carrier is a carrier that cannot be used for communication between the terminal device and the base station.

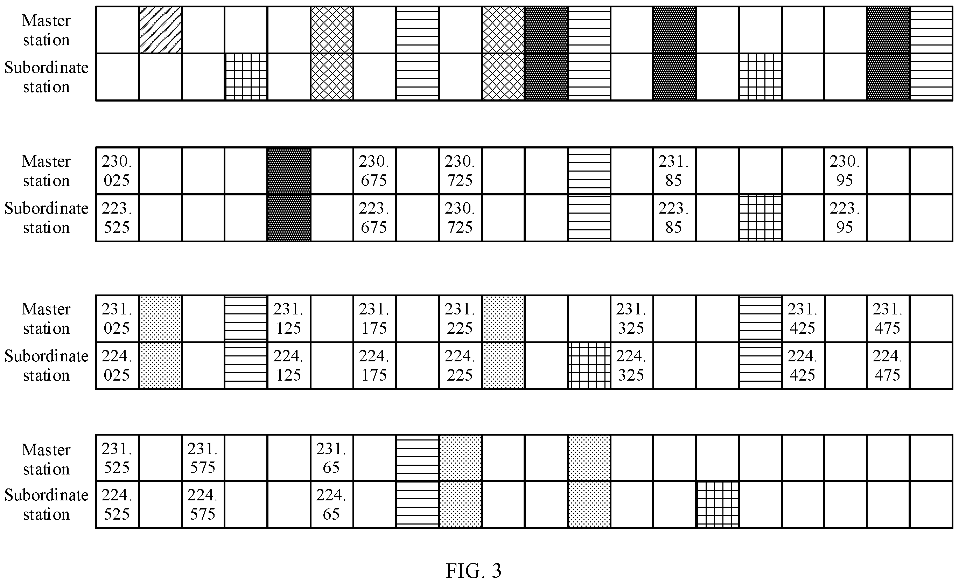

An IoT system is used as an example. In a power system, there is a dedicated spectrum with a bandwidth of 12 MHz within a range of 223-235 MHz. In a 230 MHz IoT solution, an NB-IoT R14 technology is mainly used in an upper-layer protocol, and a physical layer is optimized based on special spectrum restrictions (for example, each channel has a bandwidth of 25 kHz and a narrowband spectrum is discrete). FIG. 2 shows a spectrum characteristic of a 230 MHz IoT system. FIG. 3 shows an available frequency of a 230 MHz IoT system.

A 223-235 MHz IoT system uses a 12 MHz frequency band, and is originally used for a radio station. A duplex mode is not clearly defined in the 223-235 MHz IoT system. As shown in FIG. 2, every 25 kHz narrowband forms an independent carrier, and a plurality of continuously distributed 25 kHz carriers can be used in a carrier aggregation (Carrier Aggregation, CA) manner, and cannot be used as a broadband carrier. In addition, for the discrete spectrum, for example, for the 230 MHz IoT system, a spectrum division manner is greatly different from that of the LTE system. It is difficult to distinguish between the valid carrier and the invalid carrier in the discrete spectrum. Therefore, the SPS mechanism of the LTE system cannot be directly used for the discrete spectrum. In the embodiments of this application, how to allocate resources, for example, whether to configure uplink resources or downlink resources, in the discrete spectrum is mainly considered.

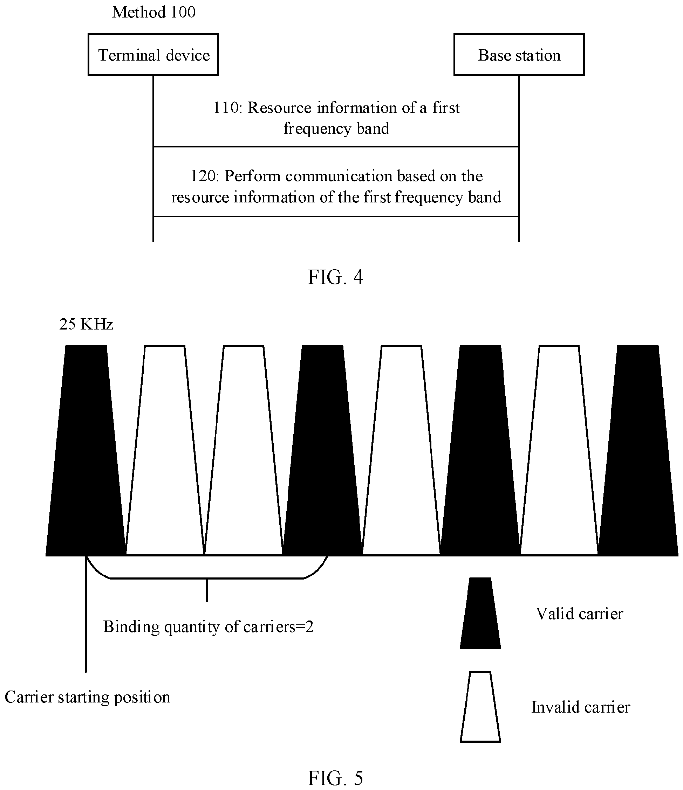

The following describes in detail the communication method 100 in the embodiments of this application with reference to FIG. 4. FIG. 4 is a schematic interaction diagram of a communication method according to an embodiment of this application. The method 100 in FIG. 4 includes the following steps.

110: A base station sends resource information of a first frequency band to a terminal device. The first frequency band includes a first carrier set and a second carrier set. The resource information of the first frequency band includes an identifier of a carrier in the first carrier set and/or an identifier of a carrier in the second carrier set. The carrier in the first carrier set can be used for communication between the terminal device and the base station, and the carrier in the second carrier set cannot be used for communication between the terminal device and the base station.

120: The base station communicates with the terminal device based on the resource information of the first frequency band.

According to the embodiments of this application, in a system with a discrete spectrum, the terminal device can determine one or more invalid carriers and perform communication on one or more valid carriers.

The first frequency band includes a plurality of carriers. The plurality of carriers include the one or more valid carriers, where the valid carrier represents the carrier in the first carrier set. The plurality of carriers further includes one or more invalid carriers, where the invalid carrier represents the carrier in the second carrier set.

That the carrier in the first carrier set (namely, the valid carrier) can be used for communication between the terminal device and the base station may be understood as that the first carrier set is a set of candidate carriers that can be used for communication between the terminal device and the base station, and may include one or more carriers. That the carrier in the second carrier set (namely, the invalid carrier) cannot be used for communication between the terminal device and the base station may be understood as that the second carrier set is a set of carriers that cannot be used or are prohibited from being used for communication between the terminal device and the base station, and may include one or more carriers. In addition, both the first carrier set and the second carrier set may be preconfigured, for example, configured by the base station.

The base station may determine a frequency band for the terminal device based on a service of the terminal device, and the frequency band is denoted as a frequency band #A. That is, it may be understood that the frequency band #A is dynamically allocated. The first frequency band may be the frequency band #A. Alternatively, the first frequency band includes the frequency band #A, that is, the frequency band #A is a segment of the first frequency band. The first frequency band includes the plurality of carriers. FIG. 5 is a schematic diagram of carrier allocation. As shown in FIG. 5, the base station allocates the frequency band #A in the first frequency band to the terminal device. The frequency band #A includes four carriers: two valid carriers and two invalid carriers. A quantity of valid carriers or a size of a frequency band to be allocated to the terminal device may be determined based on the service of the terminal device. This is not limited herein.

It should be understood that the frequency band #A is merely an example for description without loss of generality and for ease of understanding. Alternatively, the first frequency band may be semi-persistently scheduled, or may be dynamically scheduled. This is not limited in the embodiments of this application.

It should be understood that, herein, the carrier in the first carrier set is the valid carrier, and the carrier in the second carrier set is the invalid carrier. The first carrier set may include a plurality of valid carriers, and the second carrier set may include a plurality of invalid carriers.

The resource information of the first frequency band includes the identifier of the carrier in the first carrier set and/or the identifier of the carrier in the second carrier set. In other words, the base station sends the resource information of the first frequency band to the terminal device, where the resource information of the first frequency band includes identification information of the one or more valid carriers and/or identification information of the one or more invalid carriers.

The identification information of the one or more invalid carriers is used by the terminal device to determine the one or more invalid carriers. For example, the network device may identify the invalid carrier, and the terminal device may determine the invalid carrier in the frequency band based on the identifier.

Frequency band information of the one or more valid carriers is used by the terminal device to determine frequency domain information used for communication.

When information about the frequency band includes the identification information of the one or more valid carriers, the terminal device may communicate with the base station on the one or more valid carriers based on the identification information of the one or more valid carriers. Alternatively, when information about the frequency band includes the identification information of the one or more invalid carriers, the terminal device may determine the one or more invalid carriers based on the identification information of the one or more invalid carriers. Alternatively, when information about the frequency band includes the identification information of the one or more invalid carriers and the identification information of the one or more valid carriers, the terminal device may determine the one or more invalid carriers, and communicate with the base station on the one or more valid carriers.

Optionally, the resource information of the first frequency band further includes information about a starting position of the first frequency band. That the base station communicates with the terminal device based on the resource information of the first frequency band includes communicating, by the base station, with the terminal device on a third carrier based on the identifier of the carrier in the first carrier set, and/or the identifier of the carrier in the second carrier set, and the information about the starting position of the first frequency band, where the third carrier is a carrier in the first carrier set.

The terminal device may determine frequency domain resource information used to communicate with the base station, based on the identification information of the one or more valid carriers, and/or the identification information of the one or more invalid carriers, and the information about the starting position of the frequency band. The third carrier used for communication is determined based on the starting position and the identification information, thereby reducing signaling.

Optionally, the resource information of the first frequency band includes a quantity N of carriers, where the quantity N of carriers is a quantity of carriers allocated by the base station to the terminal device, and N is an integer greater than or equal to 1. That the base station communicates with the terminal device based on the resource information of the first frequency band includes communicating, by the base station, with the terminal device on N carriers based on the quantity N of carriers and the identifier of the carrier in the first carrier set, where the N carriers are carriers in the first carrier set.

The base station allocates N valid carriers to the terminal device, and the terminal device determines the N valid carriers in the valid carriers based on identifiers of the valid carriers, to communicate with the base station. The one or more frequency domain resources used for communication between the base station and the terminal device may be determined based on the identifiers of the valid carriers and a binding quantity of carriers, thereby further reducing signaling. It should be understood that the third carrier may be any one of the N valid carriers, or may be any carrier in the first carrier set.

The quantity of carriers may also be referred to as a binding quantity of carriers, or referred to as a quantity of valid carriers, and is a quantity of valid carriers allocated by the network device to the terminal device. The N carriers may be determined based on the binding quantity of carriers and the identification information of the valid carriers, so that the terminal device communicates with the base station. In such a manner of determining a frequency band, overheads can be reduced.

Alternatively, a carrier frequency resource used for communication between the terminal device and the base station may be determined based on the starting position of the first frequency band and the binding quantity of carriers.

It should be understood that the quantity of valid carriers is a quantity of carriers occupied by single burst (burst) transmission.

Optionally, the resource information of the first frequency band further includes information about a time domain resource occupied for communication between the base station and the terminal device.

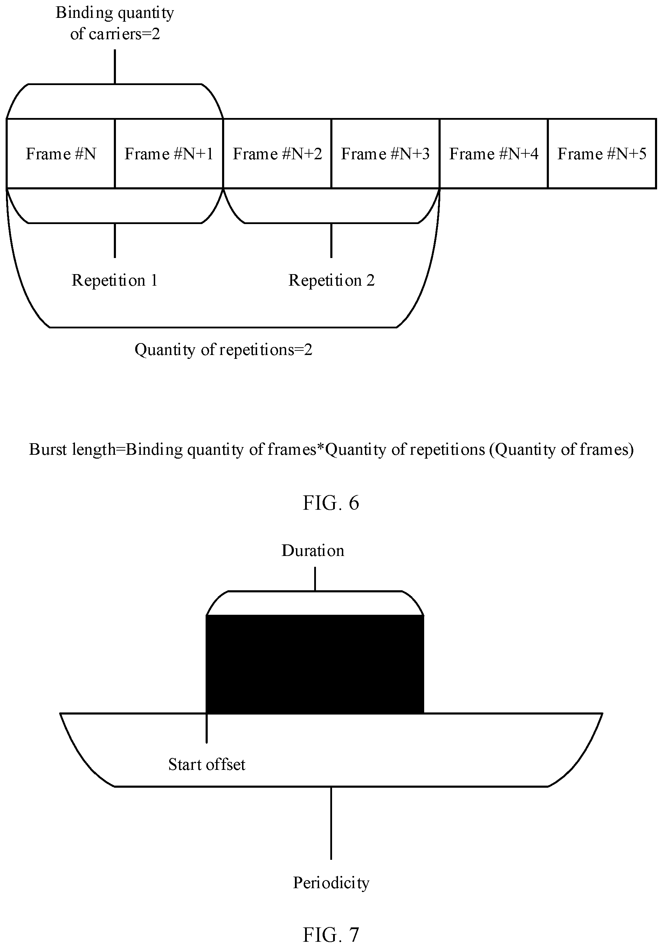

The information about the time domain resource may include a binding quantity of frames (frame). The binding quantity of frames is a quantity of frames occupied for the single burst transmission. FIG. 6 is a schematic diagram of a quantity of frames occupied by a single burst. As shown in FIG. 6, it is assumed that the binding quantity of frames is 2 and a quantity of times of retransmission (repetition Number) is 2. In this case, the length of the burst is a product of the binding quantity of frames and a quantity of repetitions, that is, four frames.

The information about the time domain resource may further include a periodicity (period), a start offset (offset), duration (duration), and the like. FIG. 7 shows configuration of a transmission time point. The transmission time point includes duration and a start offset for data transmission within one periodicity.

Optionally, the resource information of the first frequency band is carried in radio resource control RRC connection reconfiguration signaling.

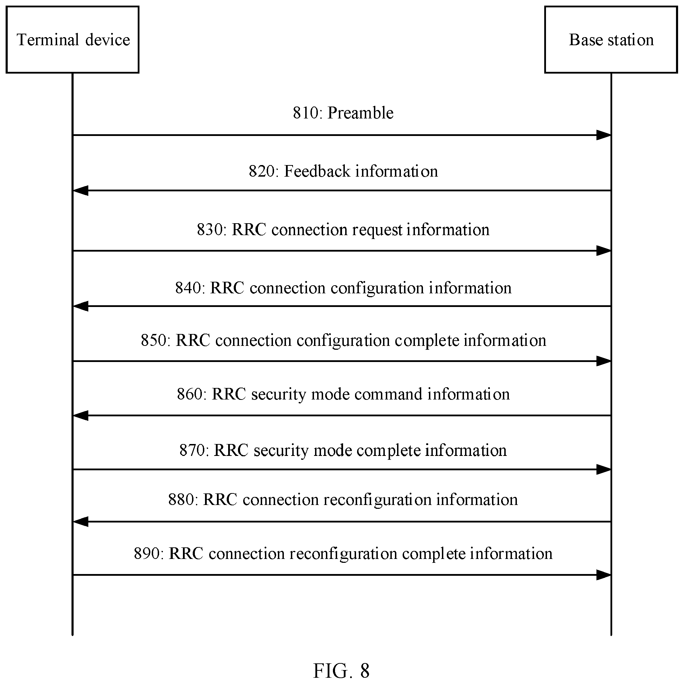

For ease of understanding, an NB-IoT access procedure is first described with reference to FIG. 8.

810: A terminal device sends a preamble (preamble) to a base station, to notify the base station that there is a random access request.

820: The base station sends feedback information (response) to the terminal device. Specifically, the terminal device may determine, based on the received feedback information, whether feedback information desired by the terminal device is successfully received, and then perform subsequent processing.

830: The terminal device sends RRC connection request information to the base station. Specifically, the following describes information carried in the RRC connection request information.
(1) During initial access (initial access), the RRC connection request information is RRC connection request information transmitted on a common control channel (common control channel, CCCH), and at least NAS terminal device identification information needs to be carried.
(2) During RRC connection reestablishment, the RRC connection request information is RRC connection reestablishment request information transmitted on the CCCH, and no NAS message is carried.
(3) During handover (handover), the RRC connection request information is encrypted and integrity-protected RRC Handover Confirm transmitted on a dedicated control channel (Dedicated Control Channel, DCCH), and a cell radio network temporary identifier (Cell Radio Network Temporary Identifier, C-RNTI) of the terminal device needs to be included, and if possible, a BSR needs to be carried.
(4) For another trigger event, at least the C-RNTI needs to be carried.

840: The base station sends RRC connection configuration information to the terminal device.

850: The terminal device sends RRC connection configuration complete information to the base station.

860: The base station sends RRC security mode command (RRC Security Mode Command) information to the terminal device.

870: The terminal device sends RRC security mode complete (RRC Security Mode Complete) information to the base station.

880: The base station sends RRC connection reconfiguration (RRC Connection Reconfiguration) information to the terminal device.

890: The terminal device sends RRC connection reconfiguration complete (RRC Connection Reconfiguration Complete) information to the base station.

Information about a first carrier is carried in RRC connection reconfiguration signaling, thereby reducing signaling overheads.

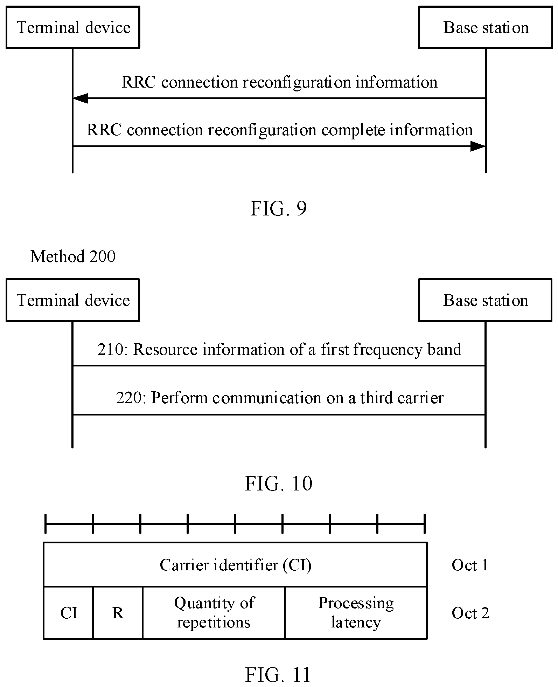

With reference to FIG. 9, the following describes the foregoing process by using an example in which downlink resource configuration is performed for a terminal device.

First, a base station sends RRC connection reconfiguration information to a terminal device. The RRC connection reconfiguration information includes information about parameters used for downlink resource configuration. The information may be carried on a physical downlink shared channel (Physical Downlink Shared Channel, PDSCH). The parameters used for downlink resource configuration include a binding quantity of carriers, a starting carrier position, a binding quantity of frames, a modulation and coding scheme index (modulation and coding scheme Index, mcs-Index), a quantity of repetitions, a periodicity, a start offset, duration, and the like. Both the binding quantity of carriers and the quantity of repetitions refer to occupied frequency domain resources. Specific meanings of the parameters are described above. Details are not described herein again.

Then, the terminal device sends RRC connection configuration complete information to the base station.

It should be noted that a process of performing uplink resource configuration for the terminal device is similar to the foregoing process. Details are not described herein again.

It should be noted that the embodiments of this application may further be applied to a scenario in which downlink or uplink resource configuration corresponding to scheduling-free transmission is performed for the terminal device.

Scheduling-free transmission may be as follows: A network device pre-allocates a plurality of transmission resources to a terminal device and notifies the terminal device of the plurality of transmission resources. When the terminal device needs to transmit uplink data, the terminal device selects at least one of the plurality of transmission resources that are pre-allocated by the network device, and sends the uplink data by using the at least one selected transmission resource. The network device detects, on the at least one of the plurality of transmission resources that are pre-allocated by the network device, the uplink data sent by the terminal device.

Alternatively, scheduling-free transmission may mean that a network device pre-allocates a plurality of transmission resources to a terminal device and notifies the terminal device of the plurality of transmission resources, so that when the terminal device needs to transmit uplink data, the terminal device selects at least one of the plurality of transmission resources that are pre-allocated by the network device, and sends the uplink data by using the at least one selected transmission resource.

Alternatively, scheduling-free transmission may refer to: obtaining information about a plurality of pre-allocated transmission resources; selecting at least one of the plurality of transmission resources when uplink data needs to be transmitted, and sending the uplink data by using the at least one selected transmission resource. In an obtaining manner, the information about the plurality of pre-allocated transmission resources may be obtained from a network device.

Alternatively, scheduling-free transmission may be a method for transmitting uplink data by a terminal device without dynamic scheduling performed by a network device. The dynamic scheduling may be a scheduling manner in which the network device indicates, by using signaling, a transmission resource for each uplink data transmission of the terminal device.

Alternatively, scheduling-free transmission may mean that a terminal device transmits uplink data without scheduling performed by a network device. The scheduling may be as follows: The terminal device sends an uplink scheduling request to the network device. After receiving the scheduling request, the network device sends an uplink grant to the terminal device, where the uplink grant indicates an uplink transmission resource allocated to the terminal device.

Alternatively, scheduling-free transmission may refer to a contention transmission mode and may specifically mean that a plurality of terminals simultaneously transmit uplink data on a same pre-allocated time-frequency resource without scheduling performed by a base station.

FIG. 10 is a schematic diagram of a communication method according to another embodiment of this application. A method 200 includes the following steps.

210: A terminal device receives resource information of a first frequency band sent by a base station. The first frequency band includes a first carrier set and a second carrier set. The resource information of the first frequency band includes an identifier of a carrier in the first carrier set and/or an identifier of a carrier in the second carrier set. The carrier in the first carrier set can be used for communication between the terminal device and the base station, and the carrier in the second carrier set cannot be used for communication between the terminal device and the base station.

220: Perform communication on a third carrier. To be specific, the terminal device determines, in the first carrier set based on the resource information of the first frequency band, a carrier used to communicate with the base station.

According to the communication method in this embodiment of this application, the terminal device receives information about one or more valid carriers and/or information about one or more invalid carriers that are/is sent by a network device, so that the terminal device can determine the one or more valid carriers in discrete carriers, and then communicate with the network device on the one or more valid carriers, thereby ensuring effective communication between the terminal device and the network device.

It should be understood that the third carrier is any carrier in the first carrier set.

Optionally, the resource information of the first frequency band further includes information about a starting position of the first frequency band. That the terminal device determines, in the first carrier set based on the resource information of the first frequency band, a carrier used to communicate with the base station includes: determining, by the terminal device in the first carrier set, the carrier used to communicate with the base station, based on the identifier of the carrier in the first carrier set, and/or the identifier of the carrier in the second carrier set, and the information about the starting position of the first frequency band.

Optionally, the resource information of the first frequency band includes a quantity N of carriers, where the quantity N of carriers is a quantity of carriers allocated by the base station to the terminal device, and N is an integer greater than or equal to 1. That the terminal device determines, in the first carrier set based on the resource information of the first frequency band, a carrier used to communicate with the base station includes: determining, by the terminal device in the first carrier set based on the quantity N of carriers and the identifier of the carrier in the first carrier set, N carriers used to communicate with the base station, where the N carriers are carriers in the first carrier set.

Optionally, the terminal device sends feedback information to the base station, where the feedback information includes information about a carrier position, information about a quantity of repetitions, and information about a processing latency.

According to the communication method in this embodiment of this application, a demodulation result can be fed back by using a hybrid automatic repeat request (Hybrid Automatic Repeat reQuest, HARQ) technology in a discrete spectrum.

It should be understood that, for PDSCH transmission, the demodulation result needs to be fed back by using the HARQ technology. The HARQ technology is a technology formed by combining a forward error correction (Forward Error Correction, FEC) coding technology and an automatic repeat request (Automatic Repeat reQuest, ARQ) technology.

For example, in the HARQ technology, after receiving data from a transmit end, a receive end may determine whether the data is correctly decoded. If the data cannot be accurately decoded, the receive end may feed back negative-acknowledge (Negative-acknowledge, NACK) information to the transmit end, so that the transmit end can determine, based on the NACK information, that the receive end does not accurately receive the data, and then perform retransmission. If the data can be accurately decoded, the receive end may feed back acknowledge (Acknowledge, ACK) information to the transmit end, so that the transmit end can determine, based on the ACK information, that the receive end accurately receives the data, and then determined that data transmission is completed.

That is, in this embodiment of this application, the terminal device may send the ACK information to the network device when decoding succeeds, and may feed back the NACK information to the network device when decoding fails.

As an example instead of a limitation, in this embodiment of this application, the feedback information may include the ACK information or the NACK information in the HARQ technology.

Optionally, the feedback information is carried on a physical uplink control channel (Physical Uplink Control Channel, PUCCH).

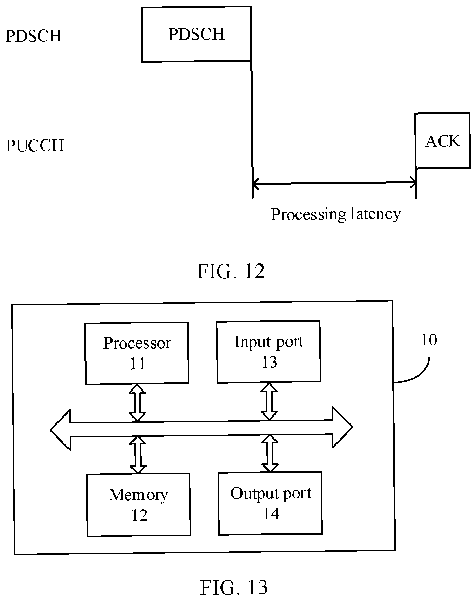

Specifically, a new MAC control element (MAC control element) is carried in a media access control (Media Access Control, MAC) PDSCH data packet, and a format definition is shown in FIG. 11. The data packet includes a carrier identifier, that is, a carrier position at which the terminal device transmits the data. The data packet further includes a quantity of repetitions and a processing latency. The quantity of repetitions represents a quantity of times of retransmission, and the processing latency represents a processing latency from PDSCH transmission to PUCCH feedback. FIG. 12 is a schematic diagram of a processing latency.

According to the communication method in this embodiment of this application, the network device determines the one or more valid carriers and the one or more invalid carriers on the first frequency band, and sends the information about the one or more valid carriers and/or the information about the one or more invalid carriers to the terminal device, so that the terminal device determines the one or more valid carriers in the discrete carriers, and then communicates with the network device on the one or more valid carriers, thereby ensuring effective communication between the terminal device and the network device.

With reference to FIG. 1 to FIG. 12, the foregoing describes in detail the communication method applicable to the embodiments of this application. With reference to FIG. 13 to FIG. 16, the following describes in detail a communications apparatus applicable to the embodiments of this application.

FIG. 13 is a schematic diagram of a communications apparatus according to an embodiment of this application. As shown in FIG. 13, the apparatus 10 may be a network device, or may be a chip or a circuit, for example, a chip or a circuit that can be disposed in a network device. The network device may correspond to the network device in the foregoing method.

The apparatus 10 may include a processor 11 (that is, an example of a processing unit) and a memory 12. The memory 12 is configured to store an instruction, and the processor 11 is configured to execute the instruction stored in the memory 12, so that the apparatus 20 implements the steps performed by the network device in the corresponding method in FIG. 2.

Further, the apparatus 10 may further include an input port 13 (that is, an example of a receiving unit) and an output port 14 (that is, another example of a sending unit). Further, the processor 11, the memory 12, the input port 13, and the output port 14 may communicate with each other through an internal connection route, to transmit control and/or a data signal. The memory 12 is configured to store a computer program. The processor 11 may be configured to invoke the computer program from the memory 12 and run the computer program, to control the input port 13 to receive a signal and control the output port 14 to send a signal, thereby completing the steps performed by the network device in the foregoing method. The memory 12 may be integrated into the processor 11, or may be separated from the processor 11.

Optionally, if the apparatus 10 is the network device, the input port 13 is a receiver and the output port 14 is a transmitter. The receiver and the transmitter may be a same physical entity or different physical entities. If being the same physical entity, the receiver and the transmitter may be collectively referred to as a transceiver.

Optionally, if the apparatus 10 is the chip or the circuit, the input port 13 is an input interface and the output port 14 is an output interface.

In an implementation, it may be considered that functions of the input port 13 and the output port 14 are implemented by using a transceiver circuit or a dedicated transceiver chip. It may be considered that the processor 11 is implemented by using a dedicated processing chip, processing circuit, or processor, or a general-purpose chip.

In another implementation, it may be considered to implement the network device provided in the embodiments of this application in a manner of using a general-purpose computer. To be specific, program code that is used to implement functions of the processor 11, the input port 13, and the output port 14 is stored in the memory 12, and a general-purpose processor implements the functions of the processor 11, the input port 13, and the output port 14 by executing the code in the memory 12.

Optionally, in this embodiment of this application, the output port 14 is configured to send resource information of a first frequency band to a terminal device, where the first frequency band includes a first carrier set and a second carrier set, the resource information of the first frequency band includes an identifier of a carrier in the first carrier set and/or an identifier of a carrier in the second carrier set, the carrier in the first carrier set can be used for communication between the terminal device and the base station, and the carrier in the second carrier set cannot be used for communication between the terminal device and the base station. The processor 11 is configured to communicate with the terminal device based on the resource information of the first frequency band.

Optionally, the resource information of the first frequency band includes information about a starting position of the first frequency band. The processor 11 is specifically configured to communicate with the terminal device on a third carrier based on the identifier of the carrier in the first carrier set, and/or the identifier of the carrier in the second carrier set, and the information about the starting position of the first frequency band, where the third carrier is a carrier in the first carrier set.

Optionally, the resource information of the first frequency band includes a quantity N of carriers, where the quantity N of carriers is a quantity of carriers allocated by the base station to the terminal device, and N is an integer greater than or equal to 1. The processor 11 is specifically configured to communicate with the terminal device on N carriers based on the quantity N of carriers and the identifier of the carrier in the first carrier set, where the N carriers are carriers in the first carrier set.

Optionally, the resource information of the first frequency band further includes information about a time domain resource occupied for communication between the base station and the terminal device.

Optionally, the resource information of the first frequency band is carried in radio resource control RRC connection reconfiguration signaling.

Functions and actions of the modules or units in the communications apparatus 10 listed above are merely examples for description. The modules or units in the communications apparatus 10 may be configured to perform actions or processing processes performed by the network device in the method 100 and the method 200. To avoid repetition, detailed descriptions thereof are omitted herein.

For concepts, explanations, detailed descriptions, and other steps of the apparatus 10 that are related to the technical solutions provided in the embodiments of this application, refer to the descriptions of the content in the foregoing methods or other embodiments. Details are not described herein again.

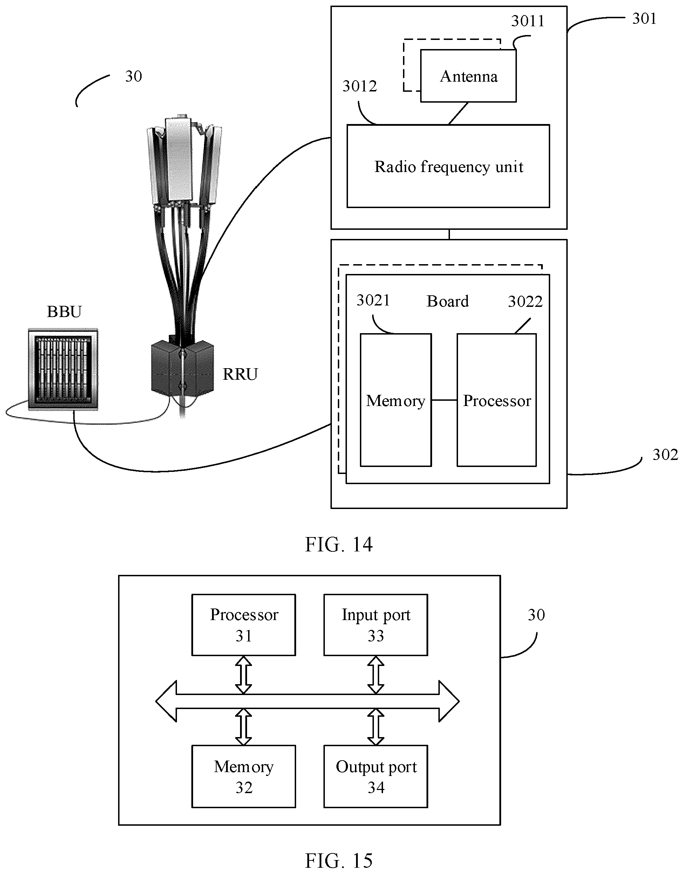

FIG. 14 is a schematic structural diagram of a network device according to an embodiment of this application. The network device may be configured to implement functions of the network device in the foregoing method. For example, FIG. 14 may be a schematic structural diagram of a base station. As shown in FIG. 14, the base station may be applied to the system shown in FIG. 1. A base station 20 includes one or more radio frequency units, such as a remote radio unit (remote radio unit, RRU) 201 and one or more baseband units (baseband unit, BBU) (which may also be referred to as a digital unit, digital unit, DU) 202. The RRU 201 may be referred to as a transceiver unit, a transceiver machine, a transceiver circuit, a transceiver, or the like, and may include at least one antenna 2011 and a radio frequency unit 2012. The RRU 201 part is mainly configured to perform sending and receiving of a radio frequency signal and conversion between a radio frequency signal and a baseband signal, for example, configured to send the signaling message in the foregoing embodiments to a terminal device. The BBU 202 part is mainly configured to perform baseband processing, control the base station, and the like. The RRU 201 and the BBU 202 may be physically disposed together, or may be physically separated, that is, in a distributed base station.

The BBU 202 is a control center of the base station, may also be referred to as a processing unit, and is mainly configured to complete baseband processing functions such as channel coding, multiplexing, modulation, and spectrum spreading. For example, the BBU (the processing unit) 202 may be configured to control the base station 20 to execute an operation procedure related to the network device in the foregoing method embodiments.

In an example, the BBU 202 may include one or more boards, and a plurality of boards may jointly support a radio access network (such as an LTE system or a 5G system) of a single access standard, or may separately support radio access networks of different access standards. The BBU 202 further includes a memory 2021 and a processor 2022. The memory 2021 is configured to store a necessary instruction and data. For example, the memory 2021 stores the codebook and the like in the foregoing embodiments. The processor 2022 is configured to control the base station to perform a necessary action, for example, is configured to control the base station to perform an operation procedure related to the network device in the foregoing method embodiments. The memory 2021 and the processor 2022 may serve the one or more boards. In other words, a memory and a processor may be independently disposed on each board. Alternatively, a plurality of boards may share a same memory and a same processor. In addition, a necessary circuit may further be disposed on each board.

In a possible implementation, with development of a system-on-chip (System-on-chip, SoC) technology, all or some functions of the parts 202 and 201 may be implemented by using the SoC technology, for example, implemented by using one base station function chip. The base station function chip integrates components such as a processor, a memory, and an antenna port. A program of a base station-related function is stored in the memory. The processor executes the program to implement the base station-related function. Optionally, the base station function chip can also read a memory outside the chip to implement the base station-related function.

FIG. 15 is a schematic diagram of a communications apparatus according to an embodiment of this application. As shown in FIG. 15, the apparatus 30 may be a terminal device, or may be a chip or a circuit, for example, a chip or a circuit that can be disposed in a terminal device. The terminal device may correspond to the terminal device in the foregoing method.

The apparatus 30 may include a processor 31 (that is, an example of a processing unit) and a memory 32. The memory 32 is configured to store an instruction, and the processor 31 is configured to execute the instruction stored in the memory 32, so that the apparatus 30 implements the steps performed by the terminal device in the method 100 and the method 200.

Further, the apparatus 30 may further include an input port 33 and an output port 33. Further, the processor 31, the memory 32, the input port 33, and the output port 34 may communicate with each other through an internal connection route, to transmit control and/or a data signal. The memory 32 is configured to store a computer program. The processor 31 may be configured to invoke the computer program from the memory 32 and run the computer program, to control the input port 33 to receive a signal and control the output port 34 to send a signal, thereby completing the steps performed by the terminal device in the method 200. The memory 32 may be integrated into the processor 31, or may be separated from the processor 31.

The input port 33 is controlled to receive a signal, and the output port 34 is controlled to send a signal, thereby completing the steps performed by the terminal device in the foregoing method. The memory 32 may be integrated into the processor 31, or may be separated from the processor 31.

Optionally, if the apparatus 30 is the terminal device, the input port 33 is a receiver and the output port 34 is a transmitter. The receiver and the transmitter may be a same physical entity or different physical entities. If being the same physical entity, the receiver and the transmitter may be collectively referred to as a transceiver.

Optionally, if the apparatus 30 is the chip or the circuit, the input port 33 is an input interface and the output port 34 is an output interface.

Optionally, if the apparatus 30 is the chip or the circuit, the apparatus 30 may not include the memory 32. The processor 31 may read an instruction (a program or code) in a memory outside the chip, to implement a function of the terminal device in the foregoing method.

In an implementation, it may be considered that functions of the input port 33 and the output port 34 are implemented by using a transceiver circuit or a dedicated transceiver chip. It may be considered that the processor 31 is implemented by using a dedicated processing chip, processing circuit, or processor, or a general-purpose chip.

In another implementation, it may be considered to implement the terminal device provided in the embodiments of this application in a manner of using a general-purpose computer. To be specific, program code that is used to implement functions of the processor 31, the input port 33, and the output port 34 is stored in the memory, and a general-purpose processor implements the functions of the processor 31, the input port 33, and the output port 34 by executing the code in the memory.

In this embodiment of this application, the input port 33 is configured to receive resource information of a first frequency band sent by a base station, where the first frequency band includes a first carrier set and a second carrier set, the resource information of the first frequency band includes an identifier of a carrier in the first carrier set and/or an identifier of a carrier in the second carrier set, the carrier in the first carrier set can be used for communication between the terminal device and the base station, and the carrier in the second carrier set cannot be used for communication between the terminal device and the base station. The processor 31 determines, in the first carrier set based on the resource information of the first frequency band, a carrier used to communicate with the base station.

Optionally, the resource information of the first frequency band includes information about a starting position of the first frequency band. The processor 31 is configured to determine, in the first carrier set, the carrier used to communicate with the base station, based on the identifier of the carrier in the first carrier set, and/or the identifier of the carrier in the second carrier set, and the information about the starting position of the first frequency band.

Optionally, the resource information of the first frequency band includes a quantity N of carriers, where the quantity N of carriers is a quantity of carriers allocated by the base station to the terminal device, and N is an integer greater than or equal to 1. The processor 31 is specifically configured to determine, in the first carrier set based on the quantity N of carriers and the identifier of the carrier in the first carrier set, N carriers used to communicate with the base station, where the N carriers are carriers in the first carrier set.

Functions and actions of the modules or units in the communications apparatus 30 listed above are merely examples for description. The modules or units in the communications apparatus 30 may be configured to perform actions or processing processes performed by the terminal device in the method 100 and the method 200. To avoid repetition, detailed descriptions thereof are omitted herein.

For concepts, explanations, detailed descriptions, and other steps of the apparatus 30 that are related to the technical solutions provided in the embodiments of this application, refer to the descriptions of the content in the foregoing methods or other embodiments. Details are not described herein again.

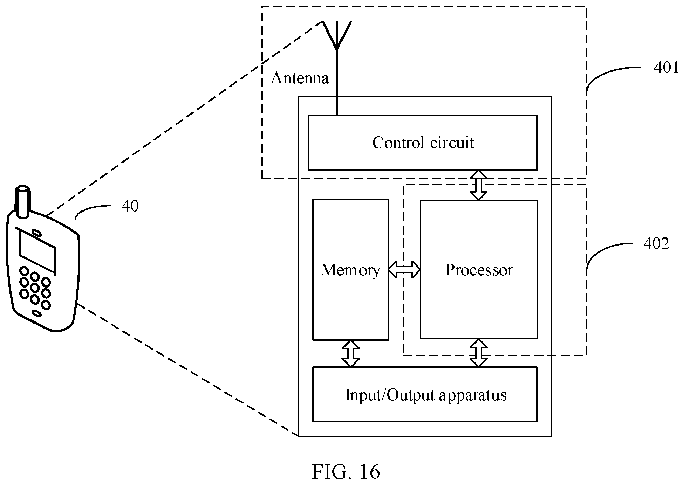

FIG. 16 is a schematic structural diagram of a terminal device according to an embodiment of this application. The terminal device may be configured to implement functions of the terminal device in the foregoing method. For ease of description, FIG. 16 shows only main components of the terminal device. As shown in FIG. 16, a terminal device 40 includes a processor, a memory, a control circuit, an antenna, and an input/output apparatus.

The processor is mainly configured to: process a communications protocol and communications data, control the entire terminal device, execute a software program, and process data of the software program, for example, is configured to support the terminal device in performing the action described in the foregoing embodiments of the method for transmitting a precoding matrix indicator. The memory is mainly configured to store the software program and the data, for example, store the codebook described in the foregoing embodiments. The control circuit is mainly configured to perform conversion between a baseband signal and a radio frequency signal, and process the radio frequency signal. A combination of the control circuit and the antenna may also be referred to as a transceiver that is mainly configured to transmit and receive a radio frequency signal in an electromagnetic wave form. The input/output apparatus such as a touchscreen, a display, or a keyboard is mainly configured to receive data entered by a user and output data to the user.

After the terminal device is powered on, the processor may read the software program in a storage unit, explain and execute an instruction of the software program, and process the data of the software program. When data needs to be sent in a wireless manner, the processor performs baseband processing on the to-be-sent data, and outputs a baseband signal to a radio frequency circuit. After performing radio frequency processing on the baseband signal, the radio frequency circuit sends a radio frequency signal through the antenna in the electromagnetic wave form. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 16 shows only one memory and one processor. An actual terminal device may have a plurality of processors and a plurality of memories. The memory may also be referred to as a storage medium, a storage device, or the like. This is not limited in the embodiments of this application.

In an optional implementation, the processor may include a baseband processor and a central processing unit. The baseband processor is mainly configured to process a communications protocol and communications data. The central processing unit is mainly configured to control the entire terminal device, execute a software program, and process data of the software program. Functions of the baseband processor and the central processing unit are integrated into the processor in FIG. 16. A person skilled in the art may understand that the baseband processor and the central processing unit each may be an independent processor, and are interconnected by using technologies such as a bus. A person skilled in the art may understand that the terminal device may include a plurality of baseband processors to adapt to different network standards, the terminal device may include a plurality of central processing units to improve a processing capability of the terminal device, and the components of the terminal device may be connected by using various buses. The baseband processor may also be expressed as a baseband processing circuit or a baseband processing chip. The central processing unit may also be expressed as a central processing circuit or a central processing chip. A function of processing the communications protocol and the communications data may be built in the processor, or may be stored in the storage unit in a form of the software program. The processor executes the software program to implement a baseband processing function.

For example, in this embodiment of this application, the antenna and the control circuit that have sending and receiving functions may be considered as a transceiver unit 401 of the terminal device 40, and the processor having a processing function may be considered as a processing unit 402 of the terminal device 40. As shown in FIG. 15, the terminal device 40 includes the transceiver unit 401 and the processing unit 402. The transceiver unit may also be referred to as a transceiver, a transceiver machine, a transceiver apparatus, or the like. Optionally, a component for implementing a receiving function in the transceiver unit 401 may be considered as a receiving unit, and a component for implementing a sending function in the transceiver unit 401 may be considered as a sending unit. That is, the transceiver unit 401 includes the receiving unit and the sending unit. For example, the receiving unit may also be referred to as a receiver, a receiver, a receiver circuit, or the like, and the sending unit may be referred to as a transmitter, a transmitter, a transmit circuit, or the like.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a base station, resource information of a first frequency band to a terminal device, wherein the first frequency band comprises a first carrier set and a second carrier set, the resource information of the first frequency band comprises an identifier of a carrier in the first carrier set and/or an identifier of a carrier in the second carrier set, the carrier in the first carrier set can be used for communication between the terminal device and the base station, and the carrier in the second carrier set cannot be used for communication between the terminal device and the base station; and
communicating, by the base station, with the terminal device based on the resource information of the first frequency band.

2. The communication method according to claim 1, wherein the resource information of the first frequency band further comprises information about a starting position of the first frequency band; and
the communicating, by the base station, with the terminal device based on the resource information of the first frequency band comprises:
communicating, by the base station, with the terminal device on a third carrier based on the identifier of the carrier in the first carrier set, and/or the identifier of the carrier in the second carrier set, and the information about the starting position of the first frequency band, wherein the third carrier is a carrier in the first carrier set.

3. The communication method according to claim 1 or 2, wherein
the resource information of the first frequency band comprises a quantity N of carriers, the quantity N of carriers is a quantity of carriers allocated by the base station to the terminal device, and N is an integer greater than or equal to 1; and
the communicating, by the base station, with the terminal device based on the resource information of the first frequency band comprises:
communicating, by the base station, with the terminal device on N carriers based on the quantity N of carriers and the identifier of the carrier in the first carrier set, wherein the N carriers are carriers in the first carrier set.

4. The communication method according to any one of claims 1 to 3, wherein the resource information of the first frequency band further comprises information about a time domain resource occupied for communication between the base station and the terminal device.

5. The communication method according to any one of claims 1 to 4, wherein the resource information of the first frequency band is carried in radio resource control RRC connection reconfiguration signaling.

6. A communication method, comprising:
receiving, by a terminal device, resource information of a first frequency band sent by a base station, wherein the first frequency band comprises a first carrier set and a second carrier set, the resource information of the first frequency band comprises an identifier of a carrier in the first carrier set and/or an identifier of a carrier in the second carrier set, the carrier in the first carrier set can be used for communication between the terminal device and the base station, and the carrier in the second carrier set cannot be used for communication between the terminal device and the base station; and
determining, by the terminal device in the first carrier set based on the resource information of the first frequency band, a carrier used to communicate with the base station.

7. The communication method according to claim 6, wherein
the resource information of the first frequency band further comprises information about a starting position of the first frequency band; and
the determining, by the terminal device in the first carrier set based on the resource information of the first frequency band, a carrier used to communicate with the base station comprises:
determining, by the terminal device in the first carrier set, the carrier used to communicate with the base station, based on the identifier of the carrier in the first carrier set, and/or the identifier of the carrier in the second carrier set, and the information about the starting position of the first frequency band.

8. The communication method according to claim 6 or 7, wherein
the resource information of the first frequency band comprises a quantity N of carriers, the quantity N of carriers is a quantity of carriers allocated by the base station to the terminal device, and N is an integer greater than or equal to 1; and
the determining, by the terminal device in the first carrier set based on the resource information of the first frequency band, a carrier used to communicate with the base station comprises:
determining, by the terminal device in the first carrier set based on the quantity N of carriers and the identifier of the carrier in the first carrier set, N carriers used to communicate with the base station, wherein the N carriers are carriers in the first carrier set.

9. A communications apparatus, comprising:
a memory, configured to store a computer program; and
a processor, configured to execute the computer program stored in the memory, so that the apparatus performs the communication method according to any one of claims 1 to 8.

10. A computer-readable storage medium, comprising a computer program, wherein when the computer program is run on a computer, the computer is enabled to perform the communication method according to any one of claims 1 to 8.
